(19) Europäisches Patentamt

European Patent Office

Office européen des brevets

(11) **EP 2 253 142 B1**

(12) **FASCICULE DE BREVET EUROPEEN**

(45) Date de publication et mention de la délivrance du brevet:
**30.11.2016 Bulletin 2016/48**

(21) Numéro de dépôt: **09719938.4**

(22) Date de dépôt: **13.03.2009**

(51) Int Cl.:
*H04N 21/266* (2011.01)    *H04N 7/16* (2006.01)
*H04N 21/418* (2011.01)    *H04N 21/4623* (2011.01)

(86) Numéro de dépôt international:
**PCT/EP2009/053008**

(87) Numéro de publication internationale:
**WO 2009/112580 (17.09.2009 Gazette 2009/38)**

(54) **PROCEDE DE SECURISATION DE MESSAGES TRANSMIS PAR UN TERMINAL EMETTEUR A UN TERMINAL RECEPTEUR DISTANT**

VERFAHREN ZUM SICHERN VON DURCH EIN SENDERENDGERÄT AN EIN FERNEMPFÄNGERENDGERÄT ÜBERTRAGENEN NACHRICHTEN

METHOD OF SECURING MESSAGES TRANSMITTED BY A SENDER TERMINAL TO A REMOTE RECEIVER TERMINAL

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **14.03.2008 FR 0851652**

(43) Date de publication de la demande:
**24.11.2010 Bulletin 2010/47**

(73) Titulaire: **Viaccess**
**92057 Paris La Défense Cedex (FR)**

(72) Inventeurs:
• **CHEVALLIER, Anthony**
**78210 Saint Cyr l'Ecole (FR)**
• **PHIRMIS, Mathieu**
**92160 Antony (FR)**

(74) Mandataire: **Ilgart, Jean-Christophe et al**
**BREVALEX**
**95, rue d'Amsterdam**
**75378 Paris Cedex 8 (FR)**

(56) Documents cités:
**EP-A- 1 631 086        WO-A-91/14341**

WO-A-96/19898        WO-A-03/012603
WO-A-2005/046233    US-A1- 2005 207 580

• ALFRED J. MENEZES, PAUL C. VAN OORSCHOT AND SCOTT A. VANSTONE: "Handbook of Applied Cryptography" [Online] 1 octobre 1996 (1996-10-01), CRC PRESS , XP002494672 ISBN: 0-8493-8523-7 Extrait de l'Internet: URL:http://www.cacr.math.uwaterloo.ca/hac/about/chap1.pdf> [extrait le 2008-09-05] page 1 - page 48
• "FUNCTIONAL MODEL OF A CONDITIONAL ACCESS SYSTEM" EBU REVIEW- TECHNICAL, EUROPEAN BROADCASTING UNION. BRUSSELS, BE, no. 266, 21 décembre 1995 (1995-12-21), pages 64-77, XP000559450 ISSN: 0251-0936
• DATABASE COMPENDEX [Online] ENGINEERING INFORMATION, INC., NEW YORK, NY, US; 1 juin 2002 (2002-06-01), WEN J G ET AL: "A format-compliant configurable encryption framework for access control of video" XP002494673 Database accession no. E2002337050460 & IEEE TRANSACTIONS ON CIRCUITS AND SYSTEMS FOR VIDEO TECHNOLOGY JUNE 2002 INSTITUTE OF ELECTRICAL AND ELECTRONICS ENGINEERS INC. US, vol. 12, no. 6, juin 2002 (2002-06), pages 545-557,

**Description**

**DOMAINE TECHNIQUE**

L'invention se situe dans le domaine des télécommunications et concerne plus spécifiquement un procédé de sécurisation d'un nombre n supérieur ou égal à 1 de messages MUi (i= 1 à n) transmis par un terminal émetteur à un terminal récepteur distant.

L'invention concerne également un terminal émetteur adapté pour transmettre un nombre n supérieur ou égal à 1 de messages MUi (i= 1 à n) à un terminal récepteur distant.

L'invention concerne aussi un terminal récepteur configuré pour recevoir les messages MUi (i= 1 à n) transmis par ledit terminal émetteur.

L'invention concerne en outre un programme d'ordinateur mémorisé sur un support et destiné à être exécuté dans le terminal émetteur pour mettre en oeuvre le procédé côté émission, et un programme d'ordinateur mémorisé sur un support et destiné à être exécuté dans le terminal récepteur pour mettre en oeuvre le procédé côté réception.

L'invention vise plus précisément une amélioration de la protection des messages EMM envoyés par la tête de réseau d'un opérateur au système de réception d'un client. Elle s'applique cependant plus généralement à la protection de toute transmission de messages entre entités reliées par des réseaux de communication indépendamment de la nature et des caractéristiques desdites entités et desdits réseaux.

**ÉTAT DE LA TECHNIQUE ANTÉRIEURE**

Avec le développement croissant de la distribution de contenus via des réseaux de communication, le risque de piratage de ces contenus devient une préoccupation importante aussi bien des fournisseurs que des destinataires de ces contenus.

Il est par conséquent primordial de protéger les contenus distribués contre, d'une part, les risques de détournement des droits d'accès associés à ces contenus, et d'autre part, contre la falsification de ces droits par un utilisateur.

En effet, dans les systèmes de contrôle d'accès de type CAS (pour Conditional Access System), les contenus distribués sont généralement embrouillés et leur désembrouillage conditionné par la détention de permissions logiques (un utilisateur peut accéder au contenu pendant une durée déterminée), et de clés, appelées clés d'exploitation, qui permettent d'accéder aux contenus.

Les permissions logiques et les clés d'exploitation sont généralement transmises aux terminaux récepteurs dans des messages de contrôle d'accès spécifiques EMM (pour Entitlement Management Message). Des messages EMM peuvent également comporter des commandes destinées à limiter ou supprimer des droits antérieurement acquis par l'utilisateur.

Les conditions d'accès sont généralement transmises aux terminaux récepteurs dans des messages de contrôle d'accès spécifiques ECM (pour Entitlement Control Message).

Les messages EMM et ECM doivent eux-mêmes être protégés.

Pour une meilleure compréhension concernant la terminologie propre à ce domaine technique, on pourra se reporter au document suivant : « FUNCTIONAL MODEL OF A CONDITIONAL ACCESS SYSTEM » EBU REVIEW-TECHNICAL EUROPEAN BROADCASTING UNION. BRUSSELS, BE, no 266 21 décembre 1995.

Un inconvénient de l'art antérieur provient du fait que ces messages peuvent être interceptés et analysés afin de déterminer les conditions d'accès et les clés nécessaires au désembrouillage des contenus. Un pirate peut ainsi à terme acquérir la capacité de conserver un message reçu puis de le modifier, et de le re-soumettre à son terminal récepteur de sorte que celui-ci le traite. Le pirate peut alors acquérir ou retrouver des droits qui ne lui sont pas ou plus légitimement acquis. Il peut également, dans le même objectif, acquérir la capacité de calculer lui-même des messages de son choix et de faire accepter par le terminal récepteur des messages frauduleux en tant que messages calculés par l'opérateur.

Une autre forme de fraude consiste à filtrer des messages transmis par l'opérateur pour empêcher leur prise en compte par le processeur de sécurité du terminal récepteur, par exemple lorsqu'il s'agit de messages qui risqueraient de priver l'utilisateur de droits qu'il aurait précédemment acquis.

L'état de l'art de la protection des messages de contrôle d'accès contre ces attaques est composé de diverses solutions, parmi lesquelles :

- Le chiffrement des messages à transmettre, de sorte que le pirate, à leur réception, ne sache pas si les messages contiennent des ordres positifs ou négatifs de son point de vue. Cette mesure l'empêche donc de déterminer à la volée les messages qu'il doit filtrer, rendant ainsi plus difficile le filtrage des EMM.
- L'ajout d'une redondance cryptographique aux messages à transmettre. Celle-ci permet de vérifier que les messages ont été calculés par une entité en possession d'une clef spécifique habilitée à ce calcul. Cette mesure rend ainsi plus difficile le calcul de messages authentiques de son choix, contre l'insertion desquels il protège ainsi le système.

- La combinaison logique, dans un même message, d'ordres positifs et négatifs du point de vue du pirate, de façon que le système de réception ne puisse prendre en compte avec succès l'ordre positif que s'il en a préalablement fait de même pour l'ordre négatif. Cette combinaison repose sur l'hypothèse selon laquelle le pirate est davantage pénalisé par la non prise en compte de l'ordre positif que par la prise en compte de l'ordre négatif. Cette mesure dissuade alors du filtrage de l'EMM intégrant la combinaison, contre lequel il protège ainsi le système.

Dans le cas du chiffrement des EMM : si le pirate ignore a priori quel message il manipule, il peut en déterminer les effets par l'expérience : par exemple en le soumettant à un système de réception réservé à ses tests.

Il peut également ne pas soumettre les messages chiffrés à son système de réception, jusqu'à ce que celui-ci ne fonctionne plus, obtenant éventuellement ainsi un temps supplémentaire et illégitime d'accès aux contenus considérés.

Dans le cas où l'authentification des messages de contrôle d'accès se fait par une redondance cryptographique, cette mesure n'a pas d'effet dans les cas suivants :

- si le pirate a réussi à obtenir la clé ou s'il a réussi à obtenir une redondance cryptographique correcte. Ceci est particulièrement possible si ladite redondance cryptographique est symétrique.
- si le pirate a réussi à faire accepter un message, par le processeur de sécurité, comme comportant une redondance cryptographique correcte, et donc comme authentique. Cela est notamment possible en perturbant physiquement l'environnement de fonctionnement du processeur de sécurité du système de réception chargé de vérifier cette authenticité. Parmi ces perturbations, figurent par exemple l'élévation brusque de la température, la variation du signal d'alimentation électrique ou de l'horloge, l'exposition du composant à des impulsions laser, des émissions électromagnétiques ou des rayonnements de particules radioactives.

Dans le cas où la protection des messages est réalisée par transmission au terminal récepteur d'une combinaison d'ordres positifs et négatifs, la mesure n'est intéressante que lorsque le pirate a quelque chose à perdre. En particulier, certaines attaques consistent à ajouter illégalement des droits dans des processeurs de sécurité officiels (cas dénommés MOSC, Modified Official SmartCard). Dans ce cas, le pirate ne subit une perte en filtrant les messages que si l'opérateur change les clés d'exploitation.

Or il est préférable de ne pas transférer ces clés dans un multiplex, afin de ne pas les exposer inutilement.

Il apparaît donc qu'il n'est pas toujours possible à un système de contrôle d'accès (CAS) de contrer les attaques des pirates, et en particulier de contrer la suppression de messages non désirés ou l'insertion de messages qui ne devraient pas être soumis au processeur de sécurité.

Le but de l'invention est de pallier les insuffisances des systèmes de contrôle d'accès de l'art antérieur décrits ci-dessus.

Le document « ALFRED J. MENEZES, PAUL C. VAN OORSCHOT AND SCOTT A. VANSTONE: "Handbook of applied Cryptography" CRC PRESS, 1 October 1996 (1996-10-01), XP002494672 ISBN: 0-8493-8523-7 » décrit de façon générale la définition d'une fonction de permutation utilisée dans certains systèmes cryptographiques selon laquelle on considère un ensemble S d'éléments et on calcule pour chacun des éléments de cet ensemble son image par une fonction réversible p. Dans la mesure où p est une bijection, chaque élément de l'ensemble S peut être retrouvé par application de $p^{-1}$, la fonction inverse de p à son image.

Le document "FUNCTIONAL MODEL OF A CONDITIONAL ACCESS SYSTEM" EBU REVIEW-TECHNICAL, EUROPEANBROADCASTIN UNION. BRUSSELS, BE, no.266.21 décembre 1995 (1995-12-21), pages 64-77 XP000559450, ISSN: 0251-0936" décrit de façon général un model fonctionnel d'un système de contrôle d'accès.

## EXPOSÉ DE L'INVENTION

L'invention est basée sur l'idée de remplacer le message utile, c'est-à-dire transportant de l'information utile à protéger, par une séquence de messages contenant, en plus du message utile à protéger, en un rang prédéterminé, des messages secondaires, préférentiellement d'apparence proche et en nombre prédéterminé, faisant office de brouillage et ne transportant pas d'information utile à un autre effet.

A cet effet, l'invention préconise un procédé de sécurisation d'un nombre n supérieur ou égal à 1 de messages MUi (i= 1 à n) transmis par un terminal émetteur à un terminal récepteur, procédé comportant les étapes suivantes :

Préalablement à l'émission, par le terminal émetteur,

a- générer une séquence ordonnée comportant N blocs de données Bj, (j= 1 à N), N étant un nombre entier supérieur ou égal à n,
b- pour chaque message MUi, (i= 1 à n), calculer une position pi dans ladite séquence ordonnée de N blocs au moyen d'une fonction pseudo-aléatoire F initialisée par au moins une donnée secrète partagée par le terminal émetteur et le terminal récepteur,

c- encapsuler chaque message MUi (i= 1 à n) dans le bloc Bj situé à la position pi, et,

d- transmettre la séquence ordonnée comportant les messages MUi audit terminal récepteur, et à la réception, par le terminal récepteur,

e- recalculer les positions pi (i = 1 à n) des blocs Bj encapsulant les messages MUi au moyen de ladite fonction F,

f- extraire les blocs Bj occupant les positions pi (i= 1 à n) de la séquence ordonnée reçue,

g- extraire les messages MUi encapsulés dans lesdits blocs Bj.

Grâce au procédé selon l'invention, toute tentative d'ajout, de remplacement ou de suppression de message est détectée lorsque la séquence de messages reçues par le terminal récepteur ne respecte pas la structure prédéterminée.

En outre, si une séquence de messages produite par un terminal émetteur selon l'invention est transmise à un terminal non conforme au terminal récepteur selon l'invention, des messages secondaires de contrôle sont alors envoyés à ce terminal récepteur.

Ces messages de contrôle peuvent par exemple transporter des commandes de détection ou de sanction susceptibles de provoquer le déclenchement d'opérations de détection ou de contre-mesure. La détection peut être de différents types, comme la mémorisation d'un log ou l'incrémentation d'un compteur de détections ; les contre-mesures peuvent par exemple consister en une invalidation temporaire ou en la destruction de la carte.

Dans une première variante de mise en oeuvre du procédé selon l'invention, ladite donnée secrète est définie en fonction du nombre N et/ou du nombre n.

Dans une deuxième variante, ladite donnée secrète est définie en fonction d'au moins un paramètre spécifique de la séquence ordonnée générée.

Selon une autre caractéristique de l'invention, la valeur de ladite donnée secrète est modifiable par le terminal émetteur selon un séquencement connu exclusivement par ledit terminal émetteur.

Afin d'assurer la gestion des blocs de données par le terminal récepteur, chaque bloc Bj de la séquence ordonnée comporte un en-tête indiquant un identifiant de ladite séquence et la position dudit bloc Bj dans cette séquence.

Dans une variante, ledit en-tête comporte en outre la valeur du nombre N et/ou celle du nombre n.

Dans une autre variante de l'invention, ladite séquence ordonnée comporte en outre au moins un message supplémentaire encapsulé dans un bloc Bj de données situé à une position différente des positions pi (i = 1 à n) dans ladite séquence ordonnée, sans action ou permettant l'activation d'une détection et/ou d'une sanction suite à une action de détournement des messages utiles MUi par un fraudeur ou à une tentative de telle action.

Dans une application particulière du procédé selon l'invention destiné à renforcer la sécurité d'un système de contrôle d'accès de type CAS, la pluralité de messages utiles MUi comporte au moins un message EMM et/ou au moins un message ECM, et ledit terminal émetteur est agencé en tête du réseau d'un opérateur.

Dans ce cas, lesdits n messages MUi comportent au moins un message EMM et/ou au moins un message ECM, et l'un au moins desdits nombres N et n est transmis au terminal récepteur dans un message chiffré.

Lesdits n messages MUi sont transmis au terminal récepteur par le terminal émetteur dans un flux de données comportant en outre des programmes audiovisuels embrouillés.

Le procédé selon l'invention est mis en oeuvre par un terminal émetteur agencé en tête de réseau d'un opérateur et configuré pour transmettre un nombre n supérieur ou égal à 1 de messages MUi (i= 1 à n) à un terminal récepteur.

Le terminal émetteur selon l'invention comporte :

- des moyens pour générer une séquence ordonnée comportant N blocs de données Bj, (j= 1 à N), N étant un nombre entier supérieur ou égal à n,
- des moyens pour calculer, pour chaque message utile MUi (i= 1 à n), une position pi dans ladite séquence ordonnée de N blocs au moyen d'une fonction pseudo-aléatoire F initialisée par au moins une donnée secrète partagée par le terminal émetteur et le terminal récepteur,
- des moyens pour encapsuler chaque message MUi (i= 1 à n) dans le bloc Bj situé à la position pi,
- des moyens pour transmettre la séquence ordonnée comportant les messages MUi audit terminal récepteur.

Le terminal récepteur selon l'invention comporte :

- des moyens pour recalculer les positions pi (i= 1 à n) des blocs Bj encapsulant les messages MUi au moyen de ladite fonction F,
- des moyens pour extraire lesdits blocs Bj de positions pi (i= 1 à n) dans la séquence ordonnée reçue,
- des moyens pour extraire les messages MUi desdits blocs Bj.

Au niveau de l'émetteur, le procédé selon l'invention est implémenté au moyen d'un programme d'ordinateur mémorisé sur un support et destiné à être exécuté dans le terminal émetteur pour :

- générer une séquence ordonnée comportant N blocs de données Bj, (j= 1 à N), N étant un nombre entier supérieur ou égal à n,
- pour chaque message utile MUi (i= 1 à n), calculer une position pi dans ladite séquence ordonnée de N blocs au moyen d'une fonction pseudo-aléatoire F initialisée par au moins une donnée secrète partagée par le terminal émetteur et le terminal récepteur
- encapsuler chaque message MUi (i= 1 à n) dans le bloc Bj situé à la position pi,
- transmettre la séquence ordonnée comportant les messages MUi audit terminal récepteur.

Au niveau du récepteur, le procédé selon l'invention est implémenté au moyen d'un programme d'ordinateur mémorisé sur un support et destiné à être exécuté dans le terminal récepteur pour :

- recalculer les positions pi (i= 1 à n) des blocs Bj encapsulant les messages MUi au moyen de ladite fonction F,
- extraire lesdits blocs Bj de positions pi (i= 1 à n) dans la séquence ordonnée reçue,
- extraire les messages MUi desdits blocs Bj.

**BRÈVE DESCRIPTION DES DESSINS**

D'autres caractéristiques et avantages de l'invention ressortiront de la description qui va suivre, prise à titre d'exemple non limitatif, en référence aux figures annexées dans lesquelles :

- la figure 1 représente un organigramme général illustrant schématiquement les étapes du procédé selon l'invention mises en oeuvre par le terminal émetteur.
- la figure 2 illustre schématiquement deux flux comportant des séquences ordonnées de données transportant des messages selon l'invention.
- la figure 3 représente un organigramme illustrant schématiquement les étapes du procédé selon l'invention mises en oeuvre par le terminal récepteur.

**EXPOSÉ DÉTAILLÉ DE MODES DE RÉALISATION PARTICULIERS**

L'invention sera décrite ci-après dans une application particulière à un système de contrôle d'accès de type (CAS). Les messages utiles à transmettre sont des EMM ou des ECM transportant des données secrètes telles que des clés de chiffrement/déchiffrement d'un contenu diffusé par un opérateur à plusieurs terminaux récepteurs. Chaque terminal récepteur est muni d'un processeur de sécurité comportant un logiciel de traitement des messages utiles transmis par l'opérateur.

Dans ce cas, l'opérateur peut utiliser différentes voies pour diffuser les messages EMM et ECM. Pour cibler des destinataires ou groupes de destinataires particuliers, l'opérateur utilise différents modes d'adressage. Ainsi, un message de type EMM-GA est destiné à tous les utilisateurs d'un groupe donné (GA - General Audience), un message de type EMM-S est destiné à un groupe particulier d'utilisateurs (S - Shared), et un message de type EMM-U est destiné à un utilisateur unique (U - User). Une voie est typiquement utilisée pour la diffusion des messages EMM de chacun de ces modes d'adressage.

Notons qu'il est également possible, même dans le cas d'un mode d'adressage unique, d'avoir différentes voies EMM. Par exemple, sur téléphone mobile, certains messages peuvent être envoyés dans le même multiplex que celui qui contient la vidéo, et d'autres peuvent être véhiculés dans des SMS. Il est également probable que plusieurs utilisateurs doivent recevoir des messages. Chaque EMM-U envoyé à un utilisateur doit être considéré comme étant une voie EMM dans le contexte de cette application.

Les voies EMM ci-dessus mentionnées sont indépendantes, et chaque voie EMM a son propre contexte de séquencement.

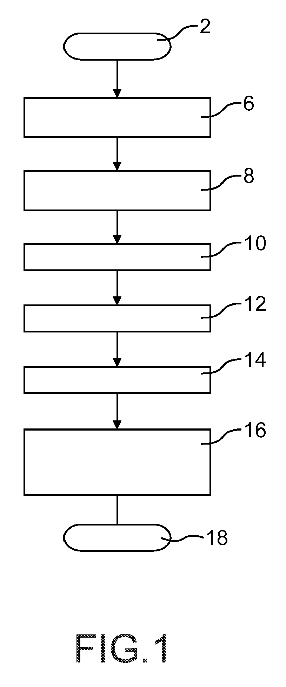

Les principales étapes du procédé selon l'invention sont décrites ci-après en référence à la figure 1.

Du côté de la tête de réseau, à l'étape 2, l'opérateur fait une demande d'envoi d'un nombre n de messages utiles MUi (i= 1 à n) (EMM et/ou ECM) au système CAS.

L'étape 6 consiste à générer ladite séquence ordonnée comportant N blocs de données Bj.

L'étape 8 consiste à calculer, pour chaque message MUi, (i= 1 à n), une position pi dans ladite séquence ordonnée de N blocs au moyen d'une fonction F.

L'étape 10 consiste à encapsuler chaque message MUi (i= 1 à n) dans le bloc Bj situé à la position pi.

L'étape 12 consiste à transmettre la séquence ordonnée comportant les messages MUi aux terminaux récepteurs.

Chaque terminal récepteur :

- recalcule les positions pi (i = 1 à n) des blocs Bj encapsulant les messages MUi au moyen de ladite fonction F (étape 14),
- extrait les blocs Bj occupant les positions pi (i= 1 à n) de la séquence ordonnée reçue (étape 16).
- extrait les messages MUi encapsulés dans lesdits blocs Bj (étape 18).

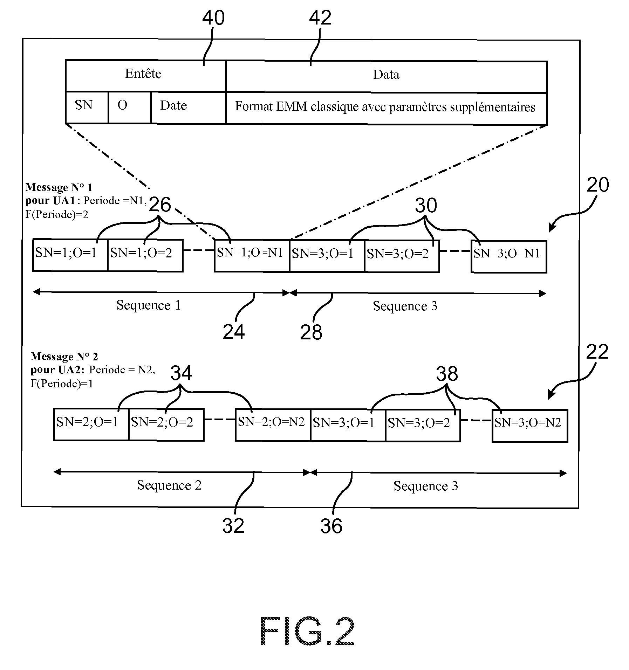

La figure 2 illustre schématiquement un premier flux de séquences 20 et un deuxième flux de séquences 22. Le premier flux 20 comporte une première séquence ordonnée 24 comportant un nombre entier N1 de blocs de données 26 et une deuxième séquence ordonnée 28 comportant également N1 blocs de données 30. Le deuxième flux 22 comporte une première séquence ordonnée 32 comportant un nombre entier N2 de blocs de données 34 et une deuxième séquence ordonnée 36 comportant également N2 blocs de données 38.

Chaque bloc de données (26, 30, 34, 38) comporte un premier sous-bloc formant en-tête 40 et un deuxième sous-bloc 42 comprenant les données utiles du bloc.

L'en-tête 40 comporte un identifiant de séquence SN, un paramètre O indiquant la position d'un bloc Bj dans la séquence et possiblement une date indiquant la date d'émission de la séquence identifiée par le paramètre SN.

Les sous-blocs 42 des blocs de données Bj (j= 1 à N) de la séquence ordonnée produite à l'étape 10 encapsulent, en plus des messages utiles, au moins un message supplémentaire dans un bloc Bj situé à une position différente des positions pi (i = 1 à n) calculées par la fonction F. Les messages supplémentaires permettent l'activation d'une détection et/ou d'une sanction suite à une action de détournement des messages utiles MUi par un fraudeur, ou à une tentative de telle action.

Bien que la Figure 2 illustre des flux ordonnés de séquences, dans une variante de mise en oeuvre, la transmission des blocs d'une séquence ordonnée pourra être réalisée dans un séquencement désordonnée selon une loi aléatoire.

Bien que la Figure 2 illustre des flux de séquences ordonnées séparés, dans une variante de mise en oeuvre, la transmission des flux de données pourra être organisée telle qu'entre deux blocs au moins d'une même séquence ordonnée soit transmis au moins un bloc appartenant à au moins une autre séquence ordonnée.

Caractérisation de la fonction F.

Le résultat de la fonction F ne devant pas être prévisible par un observateur externe du système, cette fonction est préférentiellement choisie comme pseudo-aléatoire, c'est-à-dire obéissant à une loi pseudo-aléatoire construite à partir de générateurs pseudo-aléatoires initialisés avec des paramètres de valeurs égales dans le terminal émetteur et dans les terminaux récepteurs.

Dans une première variante de mise en oeuvre du procédé selon l'invention, la fonction F est maintenue secrète.

Dans ce cas, seuls les terminaux authentifiés par l'opérateur sont habilités à mémoriser cette fonction préalablement à la transmission des flux de séquences.

Les paramètres de calcul des positions pi au moyen de la fonction F peuvent être secrets ou non.

Dans une deuxième variante, la fonction F est publique et peut notamment être enregistrée en clair dans les terminaux ou téléchargée à partir d'un serveur de l'opérateur.

Dans ce cas, l'un au moins des paramètres de calcul des positions pi au moyen de la fonction F est maintenu secret et transmis aux terminaux récepteurs sous forme chiffrée.

Un exemple de construction d'une telle fonction F est décrit ci-après.

La construction de la fonction F est fondée sur la majoration par dix (10) de la valeur du nombre N, et de celle du nombre n, c'est-à-dire du nombre de positions à déterminer dans une séquence identifiée par le paramètre SN. La sélection des octets successifs d'un aléa sous-tendant cette détermination, dix majore aussi le nombre d'octets de cet aléa, qui sera donc ci-dessous supposé codé sur 16 octets.

Rappelons que X modulo Y désigne le reste de la division entière de l'entier X par l'entier non nul Y. On note par ailleurs Card le cardinal, c'est-à-dire le nombre d'éléments d'un ensemble.

On considère :

- SN, l'identifiant de la séquence considérée, c'est-à-dire à construire, si l'on se place du côté du terminal émetteur, ou à traiter, si l'on se place du côté du terminal récepteur ;
- N, la longueur de la séquence ;
- n, le nombre de messages utiles de cette séquence ;
- $MU_1$, $MU_2$, ..., $MU_n$, les n messages utiles à transmettre dans la séquence ;
- K, une clé secrète partagée par les dispositifs émetteur et récepteur.

A l'aide d'un générateur pseudo-aléatoire, tel qu'une fonction cryptographique C, on calcule un aléa RAND propre à la séquence SN sous la forme :

$$C\ (K,\ SN)\ =\ RAND\ =\ RAND[i],\ 1\ \leq\ i\ \leq\ 16$$

Où RAND[i] désigne l'octet de rang i de RAND

C peut typiquement être :

- Une fonction de hachage H appliquée à la concaténation de la clé K et de l'identifiant de séquence SN ; l'aléa calculé est alors :

$$H\ (K\ ||\ SN)\ =\ RAND\ =\ RAND[i],\ 1\ \leq\ i\ \leq\ 16;$$

- L'algorithme de chiffrement AES (Advanced Encryption Standard) appliqué avec la clé K à l'identifiant de séquence SN ; l'alea calculé est alors :

$$AES\ (K,\ SN)\ =\ RAND\ =\ RAND[i],\ 1\ \leq\ i\ \leq\ 16.$$

On calcule ensuite la position pi de MUi dans SN sous la forme :

$$p_1\ =\ RAND[1]\ modulo\ N\ ;$$

pour $1 < i \leq n$ :

Soit, $E_i = \{j$ entier $/ 0 < j \leq N\} \setminus \{p_j / 1 \leq j < i\} = \{1, 2, ..., N\} \setminus \{p_j / 1 \leq j < i\}$, l'ensemble des entiers positifs inférieurs ou égaux à N privé des positions déjà attribuées, c'est-à-dire l'ensemble des positions encore disponibles ;

Soit $F_i = \{x_j \in E_i / \forall\ 1 \leq k, l \leq Card\ (E_i), k < l \Leftrightarrow x_k < x_l\}$, le même ensemble, ordonné ;
On a alors : $p_i = X_{RAND[i]\ module\ (N-i+1)}$

C'est-à-dire :

- R1 = RAND[1] modulo N, donne la position de $MU_1$ dans SN, parmi les N possibles ;
- R2 = RAND[2] modulo N-1, donne la position de $MU_2$ dans SN, parmi les N-1 restantes ;
- ...
- Rn = RAND[n] modulo N-n+1, donne la position de $MU_n$ dans SN, parmi les N-n+1 restantes.

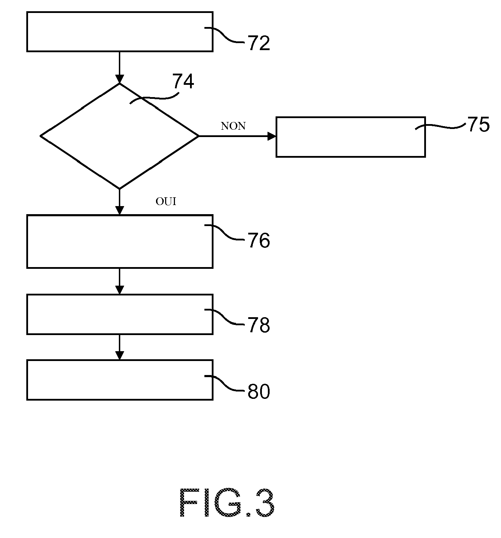

La figure 3 est un organigramme illustrant les étapes du logiciel mémorisé dans le terminal récepteur permettant de mettre en oeuvre le procédé au niveau de ce terminal.
L'exécution du logiciel au niveau du terminal récepteur permet de réaliser les étapes suivantes.
Recevoir les N blocs (étape 72).
L'étape 74 consiste à vérifier si la structure de la séquence reçue est valide.
Dans l'affirmative, la fonction F est exécutée par le processeur de sécurité pour déterminer les positions pi (i= 1 à n) des messages utiles dans la séquence reçue (étape 76).
A l'étape 78, les blocs de données Bj de positions pi (i= 1 à n) sont extraits de la séquence ordonnée reçue.
A l'étape 80, les messages utiles MUi sont extraits desdits blocs Bj.

**Revendications**

1.  Procédé de sécurisation d'un nombre entier n supérieur ou égal à 1 de messages MUi (i= 1 à n) transmis par un terminal émetteur à un terminal récepteur, **caractérisé par** les étapes suivantes :

Préalablement à l'émission, par le terminal émetteur,

a- générer une séquence ordonnée comportant N blocs de données Bj, (j= 1 à N), N étant un nombre entier supérieur ou égal à n,

b- pour chaque message MUi, (i= 1 à n), calculer une position pi dans ladite séquence ordonnée de N blocs au moyen d'une fonction pseudo-aléatoire F initialisée par au moins une donnée secrète partagée par le terminal émetteur et le terminal récepteur,

c- encapsuler chaque message MUi (i= 1 à n) dans le bloc Bj situé à la position pi, et,

d- transmettre la séquence ordonnée comportant les messages MUi audit terminal récepteur,

et à la réception, par le terminal récepteur,

e- recalculer les positions pi (i = 1 à n) des blocs Bj encapsulant les messages MUi au moyen de ladite fonction F,

f- extraire les blocs Bj occupant les positions pi (i=1 à n) de la séquence ordonnée reçue,

g- extraire les messages MUi encapsulés dans lesdits blocs Bj.

2. Procédé selon la revendication 1, dans lequel ladite donnée secrète est définie en fonction du nombre N et/ou du nombre n.

3. Procédé selon la revendication 1, dans lequel ladite donnée secrète est définie en fonction d'au moins un paramètre spécifique de la séquence ordonnée générée.

4. Procédé selon la revendication 1, dans lequel la valeur de ladite donnée secrète est modifiable par le terminal émetteur.

5. Procédé selon la revendication 4, dans lequel la modification de la valeur de ladite donnée secrète est réalisée selon un séquencement connu exclusivement par le terminal émetteur.

6. Procédé selon la revendication 1, dans lequel ladite séquence ordonnée comporte en outre au moins un message supplémentaire encapsulé dans un bloc Bj de données situé à une position différente des positions pi (i = 1 à n) dans ladite séquence ordonnée, sans action ou permettant l'activation d'une détection et/ou d'une sanction suite à une action de détournement des messages utiles MUi par un fraudeur ou à une tentative de telle action.

7. Procédé selon la revendication 1, dans lequel chaque bloc Bj de la séquence ordonnée comporte un en-tête indiquant un identifiant de ladite séquence et la position dudit bloc Bj dans cette séquence.

8. Procédé selon la revendication 7, dans lequel ledit en-tête comporte en outre la valeur du nombre N et/ou celle du nombre n.

9. Procédé selon la revendication 1, dans lequel ledit terminal émetteur est agencé en tête du réseau d'un opérateur.

10. Procédé selon la revendication 9, dans lequel lesdits n messages MUi comportent au moins un message EMM et/ou au moins un message ECM.

11. Procédé selon la revendication 1, dans lequel l'un au moins desdits nombres N et n est transmis au terminal récepteur dans un message chiffré.

12. Procédé selon la revendication 1, dans lequel lesdits n messages MUi sont transmis au terminal récepteur par le terminal émetteur dans un flux de données comportant en outre des programmes audiovisuels embrouillés.

13. Terminal émetteur agencé en tête de réseau d'un opérateur et configuré pour transmettre un nombre n supérieur ou égal à 1 de messages MUi (i= 1 à n) à un terminal récepteur, **caractérisé en ce qu'**il comporte :

- des moyens pour générer une séquence ordonnée comportant N blocs de données Bj, (j= 1 à N), N étant un nombre entier supérieur ou égal à n,

- des moyens pour calculer, pour chaque message utile MUi (i= 1 à n), une position pi dans ladite séquence ordonnée de N blocs au moyen d'une fonction pseudo-aléatoire F initialisée par au moins une donnée secrète partagée par le terminal émetteur et le terminal récepteur,

- des moyens pour encapsuler chaque message MUi (i= 1 à n) dans le bloc Bj situé à la position pi,

- des moyens pour transmettre la séquence ordonnée comportant les messages MUi audit terminal récepteur.

**14.** Terminal récepteur configuré pour recevoir les messages MUi transmis par l'émetteur selon la revendication 13, **caractérisé en ce qu'**il comporte :

- des moyens pour recalculer les positions pi (i= 1 à n) des blocs Bj encapsulant les messages MUi au moyen de ladite fonction F,
- des moyens pour extraire lesdits blocs Bj de positions pi (i= 1 à n) dans la séquence ordonnée reçue,
- des moyens pour extraire les messages MUi desdits blocs Bj.

**15.** Programme d'ordinateur mémorisé sur un support et destiné à être exécuté dans le terminal émetteur selon la revendication 14 pour :

- générer une séquence ordonnée comportant N blocs de données Bj, (j= 1 à N), N étant un nombre entier supérieur ou égal à n,
- pour chaque message utile MUi (i= 1 à n), calculer une position pi dans ladite séquence ordonnée de N blocs au moyen d'une fonction pseudo-aléatoire F initialisée par au moins une donnée secrète partagée par le terminal émetteur et le terminal récepteur,
- encapsuler chaque message MUi (i= 1 à n) dans le bloc Bj situé à la position pi,
- transmettre la séquence ordonnée comportant les messages MUi audit terminal récepteur.

**16.** Programme d'ordinateur mémorisé sur un support et destiné à être exécuté dans le terminal récepteur selon la revendication 14 pour :

- recalculer les positions pi (i= 1 à n) des blocs Bj encapsulant les messages MUi au moyen de ladite fonction F,
- des moyens pour extraire lesdits blocs Bj de positions pi (i= 1 à n) dans la séquence ordonnée reçue,
- des moyens pour extraire les messages MUi desdits blocs Bj.

**Patentansprüche**

**1.** Verfahren zum Sichern einer ganzen Zahl n größer oder gleich 1 von Nachrichten MUi (i = 1 bis n), die über ein Senderendgerät an ein Empfängerendgerät übertragen werden, **gekennzeichnet durch** die folgenden Schritte:

und zwar vor dem Senden **durch** das Senderendgerät

a- Erzeugen einer geordneten Sequenz mit N Datenblöcken Bj (j = 1 bis N), wobei N eine ganze Zahl größer oder gleich n ist,
b- für jede Nachricht MUi (i = 1 bis n) Berechnen einer Position pi in der geordneten Sequenz von N Blöcken mittels einer pseudo-zufälligen Funktion F, die **durch** zumindest einen geheimen Datenwert initialisiert wird, den das Senderendgerät und das Empfängerendgerät gemeinsam enthalten,
c- Einkapseln jeder Nachricht MUi (i = 1 bis n) in den Block Bj, der in der Position pi liegt, und
d- Übertragen der geordneten Sequenz mit den Nachrichten MUi an das Empfängerendgerät,
und bei Empfang **durch** das Empfängerendgerät
e- erneutes Berechnen der Positionen pi (i = 1 bis n) von Blöcken Bj, welche die Nachrichten MUi einkapseln, mittels der Funktion F,
f- Extrahieren der Blöcke Bj, welche die Positionen pi (i = 1 bis n) einnehmen, aus der empfangenen, geordneten Sequenz,
g- Extrahieren der Nachrichten MUi, die in den Blöcken Bj eingekapselt sind.

**2.** Verfahren nach Anspruch 1, wobei der geheime Datenwert in Abhängigkeit von der Anzahl N und/oder der Anzahl n bestimmt wird.

**3.** Verfahren nach Anspruch 1, wobei der geheime Datenwert in Abhängigkeit von zumindest einem spezifischen Parameter der erzeugten, geordneten Sequenz bestimmt wird.

**4.** Verfahren nach Anspruch 1, wobei die Größe des geheimen Datenwerts durch das Senderendgerät veränderbar ist.

**5.** Verfahren nach Anspruch 4, wobei die Veränderung der Größe des geheimen Datenwerts nach einer Sequenzierung erfolgt, die ausschließlich dem Empfängerendgerät bekannt ist.

**6.** Verfahren nach Anspruch 1, wobei die geordnete Sequenz ferner zumindest eine zusätzliche Nachricht enthält, die in einem Datenblock Bj eingekapselt ist, der sich ohne Zutun in einer von den Positionen pi (i = 1 bis n) verschiedenen Position in der geordneten Sequenz befindet, oder die Aktvierung einer Detektion und/oder einer Sanktion nach einer Abfangaktion von nützlichen Nachrichten durch einen Betrüger oder nach einer versuchten Aktion dieser Art gestattet.

**7.** Verfahren nach Anspruch 1, wobei jeder Block Bj der geordneten Sequenz eine Kopfzeile enthält, die eine Kennung der Sequenz und die Position des Blocks Bj in dieser Sequenz angibt.

**8.** Verfahren nach Anspruch 7, wobei die Kopfzeile ferner den Wert der Anzahl N und/oder den der Anzahl n enthält.

**9.** Verfahren nach Anspruch 1, wobei das Senderendgerät an der Kopfstelle des Netzwerks eines Betreibers angeordnet ist.

**10.** Verfahren nach Anspruch 9, wobei die n Nachrichten MUi zumindest eine EMM-Nachricht und/oder zumindest eine ECM-Nachricht enthalten.

**11.** Verfahren nach Anspruch 1, wobei zumindest eine der Anzahlen N und n dem Empfängerendgerät in einer verschlüsselten Nachricht übertragen wird.

**12.** Verfahren nach Anspruch 1, wobei die n Nachrichten MUi dem Empfängerendgerät durch das Senderendgerät in einem Datenfluss übertragen werden, der ferner verschlüsselte audiovisuelle Programme enthält.

**13.** Senderendgerät, das an der Kopfstelle eines Netzwerks eines Betreibers angeordnet und dazu konfiguriert ist, eine Anzahl n größer oder gleich 1 von Nachrichten MUi (i = 1 bis n) an ein Empfängerendgerät zu übertragen, **dadurch gekennzeichnet, dass** es enthält:

> - Mittel zum Erzeugen einer geordneten Sequenz mit N Datenblöcken Bj (j = 1 bis N), wobei N eine ganze Zahl größer oder gleich n ist,
> - Mittel zum Berechnen einer Position pi in der geordneten Sequenz von N Blöcken für jede nützliche Nachricht MUi (i = 1 bis n) mittels einer pseudozufälligen Funktion F, die durch zumindest einen geheimen Datenwert initialisiert wird, den das Senderendgerät und das Empfängerendgerät gemeinsam enthalten,
> - Mittel zum Einkapseln jeder Nachricht MUi (i = 1 bis n) in den Block Bj, der in der Position pi liegt, und
> - Mittel zum Übertragen der geordneten Sequenz mit den Nachrichten MUi an das Empfängerendgerät.

**14.** Empfängerendgerät, das dazu konfiguriert ist, um die Nachrichten MUi zu empfangen, die von dem Sender nach Anspruch 13 übertragen werden, **dadurch gekennzeichnet, dass** es enthält:

> - Mittel zum erneuten Berechnen der Positionen pi (i = 1 bis n) von Blöcken Bj, welche die Nachrichten MUi einkapseln, mittels der Funktion F,
> - Mittel zum Extrahieren der Blöcke Bj der Positionen pi (i = 1 bis n) aus der empfangenen, geordneten Sequenz,
> - Mittel zum Extrahieren der Nachrichten MUi aus den Blöcken Bj.

**15.** Computerprogramm, das auf einem Träger gespeichert und dazu bestimmt ist, in dem Empfängerendgerät nach Anspruch 14 ausgeführt zu werden, um

> - eine geordnete Sequenz mit N Datenblöcken Bj (j = 1 bis N) zu erzeugen, wobei N eine ganze Zahl größer oder gleich n ist,
> - für jede nützliche Nachricht MUi (i = 1 bis n) eine Position pi in der geordneten Sequenz von N Blöcken mittels einer pseudo-zufälligen Funktion F zu berechnen, die durch zumindest einen geheimen Datenwert initialisiert wird, den das Senderendgerät und das Empfängerendgerät gemeinsam enthalten,
> - jede Nachricht MUi (i = 1 bis n) in den Block Bj einzukapseln, der in der Position pi liegt,
> - die geordnete Sequenz mit den Nachrichten MUi an das Empfängerendgerät zu übertragen.

**16.** Computerprogramm, das auf einem Träger gespeichert und dazu bestimmt ist, in dem Empfängerendgerät nach Anspruch 14 ausgeführt zu werden, um

> - die Positionen pi (i = 1 bis n) der Blöcke Bj, welche die Nachrichten MUi einkapseln, mittels der Funktion F erneut zu berechnen,
- die Blöcke Bj der Positionen pi (i = 1 bis n) aus der empfangenen, geordneten Sequenz zu extrahieren,
- die Nachrichten MUi aus den Blöcken Bj zu extrahieren.

**Claims**

1. Method for securiting a number n greater than or equal to 1 of messages MUi (i= 1 to n) transmitted by a transmitting terminal to a receiving terminal, this process including the following steps:

    Before transmitting, by the transmitting terminal,

    a- generating an ordered sequence comprising N data blocks Bj, (j= 1 to N), where N is an integer number greater than or equal to n;
    b- for each message MUi (i= 1 to n), calculating a position pi in said ordered sequence of N blocks using pseudo-random a function F initialised by at least one secret data shared by the transmitting terminal and the receiving terminal;
    c- encapsulating each message MUi (i= 1 to n) in block Bj located in position pi; and,
    d- transmitting the ordered sequence comprising messages MUi to said receiving terminal;
    and on reception, by the receiving terminal,
    e- recalculating the positions pi (i = 1 to n) of blocks Bj encapsulating messages MUi using said function F;
    f- extracting blocks Bj located at positions pi (i= 1 to n) in the received ordered sequence;
    g- extracting the messages MUi encapsulated in said blocks Bj.

2. Method according to claim 1, in which said secret data is defined as a function of the number N and/or the number n.

3. Method according to claim 1, in which said secret data is defined as a function of at least one specific parameter of the generated ordered sequence.

4. Method according to claim 2, in which the value of said secret data can be modified by the transmitting terminal.

5. Method according to claim 4, in which the value of said secret data is modified using a sequence known only to the transmitting terminal.

6. Method according to claim 1, in which said ordered sequence also comprises at least one additional message encapsulated in a block Bj of data located at a position different from positions pi (I = 1 to n) in said ordered sequence, without action or enabling activation of a detection and/or a sanction subsequent to an action by a frauder to divert useful messages MUi or an attempt at such action.

7. Method according to claim 1, in which each block Bj in the ordered sequence comprises a header indicating an identifier of said sequence and the position of said block Bj in this sequence.

8. Method according to claim 7, in which said header also comprises the value of the number N and/or the value of the number n.

9. Method according to claim 1, in which said transmitting terminal is arranged at an operator's network head-end.

10. Method according to claim 9, in which said n messages MUi comprise at least one EMM message and/or at least one ECM message.

11. Method according to claim 1, in which at least one of said numbers N and n is transmitted to the receiving terminal in an encrypted message.

12. Method according to claim 1, in which the transmitting terminal sends said n messages MUi to the receiving terminal in a data flow that also comprises scrambled audiovisual programs.

13. Transmitting terminal arranged at an operator's network head-end and configured to transmit a number n greater than or equal to 1 of messages MUi (i= 1 to n) to a receiving terminal, **characterised in that** it comprises:

- means of generating an ordered sequence comprising N data blocks Bj, (j= 1 to n), where N is an integer number greater than or equal to n;
- means of calculating for each useful message MUi (i= 1 to n) a position pi in said ordered sequence of N blocks using a pseudo-random function F initialised by at least one secret data shared by the transmitting terminal and the receiving terminal;
- means of encapsulating each message MUi (i= 1 to n) in the block Bj located at position pi;
- means of transmitting the ordered sequence comprising messages MUi to said receiving terminal.

14. Receiving terminal configured to receive messages MUi transmitted by the transmitting terminal according to claim 14, **characterised in that** it comprises:

- means of recalculating positions pi (i= 1 to n) of blocks Bj encapsulating messages MUi using said function F;
- means of extracting said blocks Bj of positions pi (i= 1 to n) in the received ordered sequence;
- means of extracting messages MUi from said blocks Bj.

15. Computer program stored on a medium and designed to be run in the transmitting terminal according to claim 14, to:

- generate an ordered sequence comprising N data blocks Bj, (j= 1 to n), where N is an integer number greater than or equal to n;
- calculate, for each useful message MUi (i= 1 to n), a position pi in said ordered sequence of N blocks using a pseudo-random function F initialised by at least one secret data shared by the transmitting terminal and the receiving terminal F;
- encapsulate each message MUi (i= 1 to n) in the block Bj located at position pi;
- send the ordered sequence comprising messages MUi to said receiving terminal.

16. Computer program stored on a medium and designed to be run in the receiving terminal according to claim 15, to:

- recalculate positions pi (i= 1 to n) of blocks Bj encapsulating messages MUi using said function F;
- extract said blocks Bj of positions pi (i= 1 to n) in the received ordered sequence;
- extract messages MUi from said blocks Bj.

FIG.1

40        42

| Entête | | | Data |
|---|---|---|---|
| SN | O | Date | Format EMM classique avec paramètres supplémentaires |

**Message N° 1**
**pour UA1** : Periode =N1,
F(Periode)=2          26                    30                                              20

| SN=1;O=1 | SN=1;O=2 | SN=1;O=N1 | SN=3;O=1 | SN=3;O=2 | SN=3;O=N1 |
|---|---|---|---|---|---|

Sequence 1                                    Sequence 3

24        28

**Message N° 2**
**pour UA2**: Periode = N2,
F(Periode)=1          34                    38                                              22

| SN=2;O=1 | SN=2;O=2 | SN=2;O=N2 | SN=3;O=1 | SN=3;O=2 | SN=3;O=N2 |
|---|---|---|---|---|---|

Sequence 2                                    Sequence 3

32        36

# FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- FUNCTIONAL MODEL OF A CONDITIONAL ACCESS SYSTEM. *EBU REVIEW-TECHNICAL EU-ROPEAN BROADCASTING UNION,* 21 Décembre 1995

- FUNCTIONAL MODEL OF A CONDITIONAL ACCESS SYSTEM. *EBU REVIEW-TECHNICAL, EU-ROPEANBROADCASTIN UNION,* 21 Décembre 1995, ISSN 0251-0936, 64-77